# EUROPEAN PATENT SPECIFICATION

(11) **EP 3 328 537 B1**
(45) Date of publication and mention of the grant of the patent: **01.01.2025**
(21) Application number: 16763574.7
(22) Date of filing: 29.07.2016
(51) Int. Cl.: B01J 20/20, B01J 20/30, B01J 20/28, B01D 53/02, C01B 3/00, C01B 32/342, C01B 32/348

(54) **A METHOD OF PREPARING A MICROPOROUS CARBON AND THE MICROPOROUS CARBON THEREBY OBTAINED**
VERFAHREN ZUR HERSTELLUNG EINES MIKROPORÖSEN KOHLENSTOFFS UND DADURCH ERHALTENER MIKROPORÖSER KOHLENSTOFF
PROCÉDÉ DE PRÉPARATION DE CARBONE MICROPOREUX ET CARBONE MICROPOREUX AINSI OBTENU

(30) Priority: 31.07.2015 IT UB20152715
(43) Date of publication of application: 06.06.2018
(73) Proprietor: SOL S.p.A., 20900 Monza (MB) (IT)
(72) Inventor: MARCHESE, Leonardo, I-10095 Grugliasco (Torino) (IT); ERRAHALI, Mina, I-15121 Alessandria (IT); GATTI, Giorgio, I-15053 Castelnuovo Scrivia (Alessandria) (IT); TEI, Lorenzo, I-10126 Torino (IT); COSSI, Maurizio, I-56121 San Lorenzo Alle Corti (Cascina) (Pisa) (IT); VALTOLINA, Daniele, I-23896 Sirtori (Lecco) (IT)
(74) Representative: Comoglio, Elena
(86) International application number: PCT/IB2016/054551
(87) International publication number: WO 2017/021843

(56) References cited:
- EP-A1- 2 450 390
- EP-A1- 2 829 319
- US-A1- 2011 224 070
- YANQIANG LI ET AL: "Ultrahigh Gas Storage both at Low and High Pressures in KOH-Activated Carbonized Porous Aromatic Frameworks", SCIENTIFIC REPORTS, vol. 3, 13 August 2013 (2013-08-13), pages 1 - 5, XP055266234, DOI: 10.1038/srep02420
- YANQIANG LI ET AL: "SI [Supporting Information] Ultrahigh Gas Storage in KOH Activated Carbonized PAFs", SCIENTIFIC REPORTS, 13 August 2013 (2013-08-13), pages 1 - 23, XP055686079, Retrieved from the Internet <URL:https://www.nature.com/articles/srep02420#Sec5> [retrieved on 20200415]
- YANQIANG LI ET AL: "Ultrahigh Gas Storage both at Low and High Pressures in KOH-Activated Carbonized Porous Aromatic Frameworks", SCIENTIFIC REPORTS, vol. 3, 13 August 2013 (2013-08-13), pages 1 - 5, XP055266234, DOI: 10.1038/srep02420

## Description

This invention relates to carbon-based materials of high microporosity obtained from the activation of hyper-cross-linked porous aromatic polymers (Hyper-Cross-linked Polymers, HCP), resulting in an increase in surface area and total pore volume. In particular there is an increase in micropore volume (both supermicropores and ultramicropores). The pores so obtained are capable of adsorbing gases, particularly hydrogen, methane and carbon dioxide.

The continuing increase in demand for energy which has occurred worldwide during the last few decades, together with concerns deriving from climate changes due to the emission of greenhouse gases, have resulted in an intensification of efforts to encourage both the development and use of new energy technologies based on alternative sources such as natural gas and hydrogen, and the capture of carbon dioxide for climatic purposes. There is therefore great interest in the development of new porous materials characterized by a suitable surface area and the presence of pores of micrometre dimensions, which can be used not only for the optimum storage of gases for energy and environmental applications, but also for applications in other sectors such as separation and catalysis.

Of the various classes of materials proposed for this purpose, porous carbons have received great attention in recent decades on account of their hydrophobic nature, high porosity and surface area, good thermal and mechanical stability and high adsorption capacity [Lu, AH.; Dai, S. Porous Materials for Carbon Dioxide Capture; Springer: Heidelberg, DE, 2014. p. 22-41]. Porous carbons are generally synthesized from the carbonization of carbon-based precursors, mainly using two methods: i) physical activation, which implies pyrolysis of the precursor at high temperatures in the presence of gases such as carbon dioxide, steam, or others; or ii) chemical activation, in which the precursor is carbonized at lower temperatures in the presence of an activating agent such as an alkaline hydroxide or transition metal oxides [Z. Hu, M. P. Srinivasan, Y. Ni, Adv. Mater. 2000, 12, 62. b) Y. Zou, B.-X. Han, Energy Fuels 2001, 15, 1383. c) A. Ahmadpour, D. D. Do, Carbon 1996, 34, 471.].

Over the years porous carbons have been developed from various precursors, mainly: i) conventional carbons obtained from the carbonization and activation of renewable precursors based on biomass; and ii) carbons deriving from synthetic polymers. The latter class of carbons is very broad and has the advantage that the chemical compositions of the carbons produced, as well as pore morphology and distribution, can be better controlled [Lu, A-H.; Dai, S. Porous Materials for Carbon Dioxide Capture; Springer: Heidelberg, DE, 2014. p. 22-41]. In particular porous carbons replicated from porous materials (hard template porous carbons) such as zeolites [T. Kyotani, Z.Ma, A. Tomita- Carbon 2003, 41, 1451-1459], MOFs (Metal-Organic Frameworks) [Yang SJ, Kim T, Im JH, Kim YS, Lee K, Jung H, Park CR (2012) Chem Mater 4:464-470] and PAFs (Porous Aromatic Frameworks) [Li, Y.; Ben, T.; Zhang, B.; Fu, Y.; Qiu, S. Scientific Reports, 2013, 3, 2420], are systems in which the porous material acts as a template on a nanometric scale, so that the porous network of the initial material is maintained in the final carbon. Microporous carbons obtained from three-dimensional (3D) aromatic polymers are described in the prior art. For example, microporous carbons obtained from PAF have been described in Li, Y.; Ben, T.; Zhang, B.; Fu, Y.; Qiu, S. Scientific Reports, 2013, 3, 2420. In this article Y. Li et al. have reported porous carbons obtained by chemical activation at various temperatures (500-900°C) of the porous polymer PAF-1, characterized by smaller surface area and pore volume than the starting material, but with a better capacity for the storage of CO₂, CH₄ and H₂ in comparison with the starting material, particularly at low pressures. This improvement in adsorbent capacity has been attributed to the bimodal pore distribution which also includes 8 Å pores that have greater affinity for gases stored with the adsorbent.

US 2011/224070 describes a method of forming microporous carbon materials from polymeric precursors such as phenolic resins.

According to the IUPAC classification, the term "micropore" is understood to mean pores having pore dimensions smaller than 20 Å. Micropores are in turn subdivided into two groups, that is ultramicropores (less than 7 Å) and supermicropores (from 7 to 20 Å).

This invention describes the preparation of microporous carbons from materials belonging to the class of 3D hyper-cross-linked polymers (known as HCP), in particular microporous carbons deriving from hyper-cross-linked polymers which can be obtained using a Friedel-Crafts reaction between a tetrahedral aromatic monomer and the cross-linking agent formaldehyde dimethyl acetal (FDA) in the presence of ferric chloride (FeCl₃) as catalyst. The present inventors have described the synthesis and optimization of hyper-cross-linked polymers designated as UPO in International Patent WO 2015/011654 and in European Patent Application EP 15425022. Also these materials have been published by the present inventors in the article with reference "Errahali, M; Gatti, G; Tei, L; Paul, G; Rolla, G; Canti, L; Fraccarollo, A; Cossi, M; Comotti, A; Sozzani, P; Marchese, L. Microporous Hyper-cross-linked Aromatic Polymers Designed for Methane and Carbon Dioxide Adsorption, J. Phys. Chem. C, 2014, 118, 28699-28710", in which the polymers have been referred to by the acronym mPAF.

Unlike carbonized PAF materials in which there is a decrease in surface area, the activation of UPO materials has resulted in microporous carbons characterized by an increase in both surface area and total pore volume, and in particular micropore volume. The presence of families of ultramicropores of dimensions below 7 Å has also been observed. It is known that a large number of ultramicropores and supermicropores of dimensions around 8 Å make a porous material particularly suitable for adsorbing and storing gases such as carbon dioxide, hydrogen and methane at low to intermediate pressures.

Other advantages in obtaining the new microporous carbon from UPO polymer relate to the economic and industrial aspect; in fact the process of polymer synthesis is very economical and easily scalable.

Thus one object of this invention is to provide a process for the preparation of a microporous carbon from a porous aromatic HCP polymer, the process being at the same time simple, cheap and easy to scale up.

Another object of this invention is that of providing a microporous carbon absorbing gases having improved gas adsorption properties and capable of being prepared through a simple, cheap and easy to scale up process.

These and other objects are accomplished by the method according to independent claim 1 and microporous carbon according to independent claim 13. The dependent claims define further characteristics of the invention and form an integral part of the description.

The scope of this invention also includes the use of gas-adsorbing microporous carbon which can be obtained by the method according to the invention to store a gas, in particular hydrogen, methane and/or carbon dioxide.

As will be illustrated in greater detail in the description below, the gas-adsorbing microporous carbon which can be obtained by the method according to the invention comprises an appreciable quantity of ultramicropores and supermicropores, which because of their dimensions are particularly suitable for adsorbing and storing the gases carbon dioxide, hydrogen and methane; in addition to this it has an improved surface area. Also this carbon can be obtained by a method of preparation which makes use of an HCP polymer obtained from widely available solvents and catalysts that are not therefore excessively expensive or particularly difficult to scale up. The advantageous and unexpected properties of the microporous carbon which can be obtained by the method according to this invention are demonstrated in particular in the experimental section of this description.

Further objects, characteristics and advantages will become obvious from the following detailed description. However although the detailed description and specific examples indicate preferred embodiments of the invention, these are provided purely by way of illustration, because various modifications and changes falling within the scope of the invention will become obvious to those skilled in the art from reading them.

The method of preparation according to the invention comprises a synthesis stage in which a Friedel-Crafts reaction is carried out using a Friedel-Crafts catalyst, a tetrahedral monomer of general formula (I) as defined below and formaldehyde dimethyl acetal (FDA) as a cross-linking agent. After the synthesis stage the porous aromatic HCP obtained is impregnated with a preferably basic activating agent solution and undergoes activating heat treatment at a temperature in the range from 500 to 950°C.

The present inventors have in fact observed that in the presence of an activating agent, preferably with a ratio by weight with respect to the polymer of between 0.5:1 and 8:1, the activating heat treatment at a temperature within the range from 500 to 950°C results in a considerable increase in the quantity of micropores, especially those having pore sizes below 7 Å, together with an obvious increase in surface area (see Table 1 below).

The microporous carbon used in the method of preparation according to the invention is prepared from a hyper-cross-linked polymer synthesized from tetrahedral monomers of formula (I), whose structure is illustrated below: 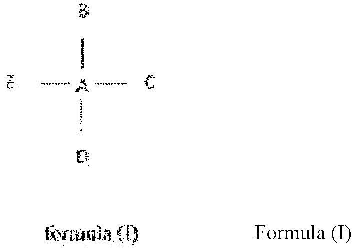 in which A is selected from a C atom, a Si atom, a Ge atom, a Sn atom, an adamantane group, an ethane group and an ethene group, 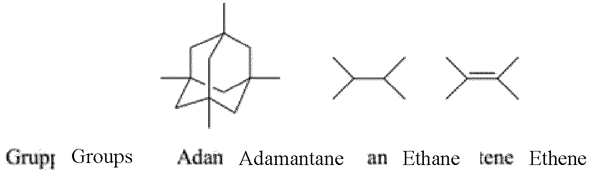 in which each of B, C, D and E are ring structures selected from monovalent radicals of the compounds benzene, naphthalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl and alkynyl groups.

In formula (I) illustrated above a halogen preferred as optional substituent is fluorine; alkyls preferred as optional substituents are methyl, ethyl, propyl, butyl; haloalkyls preferred as optional substituents are chloromethyl, chloroethyl; hydroxyalkyls preferred as optional substituents are hydroxymethyl, hydroxyethyl; amino alkyls preferred as optional substituents are aminomethyl, aminoethyl; aryls preferred as optional substituents are benzene, toluene, phenol, aniline, acetophenone, benzaldehyde, benzoic acid, o-xylene, m-xylene, p-xylene, benzonitrile, biphenyl; alkenyls preferred as optional substituents are ethenyl, propenyl, 1-methylethenyl, butenyl.

A preferred tetrahedral monomer for use in the method according to the invention is a compound of formula (I) in which each of the ring structures B, C, D and E is a monovalent radical of benzene having optionally one or more substituents as defined above. A particularly preferred tetrahedral monomer is tetraphenylmethane, in which A is a carbon atom and each of B, C, D and E is an unsubstituted monovalent radical of benzene, that is to say a phenyl radical.

Examples of suitable Friedel-Crafts catalysts for use in the method of preparation according to the invention of the HCP polymer used in the preparation of the microporous carbon are BF₃, BeCl₂, TiCl₄, SbCl₅, SnCl₄, FeCl₃, AlCl₃, Sc(OTf)₃, Mo(CO)₆, SeCl₄, TeCl₄, sulfuric acid, hydrofluoric acid and super acids, such as for example HF·SbF or HSO₃F·SbF₅. The most preferred catalyst is FeCl₃.

Suitable aprotic organic solvents for use in the method according to the invention for the HCP polymer used in the preparation of microporous carbon include both polar solvents and apolar solvents. Specific examples of solvents, provided purely by way of illustration, are dichloroethane, toluene, benzene, nitromethane (CH₃NO₂), carbon disulfide and chlorobenzene. The most preferred solvent is dichloroethane.

According to one embodiment of the method according to the invention the concentration of monomer of formula (I) in the aprotic organic solvent lies within the range from 0.001 to 0.6 M.

According to one embodiment of the method according to the invention the molar ratio of monomer of formula (I) to FDA lies within the range from 1:3 to 1:40.

The chemical structure of the porous polymer used as a precursor to obtain the microporous carbon obtained by the process described in this invention is illustrated by the following general formula (II): 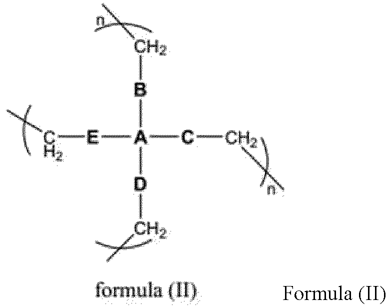 in which A, B, C, D and E are as defined above in relation to formula (I), and in which n is an integer preferably between 200 and 6000. The thermal activation which makes it possible to obtain the microporous carbon used in the process of preparation according to the invention provides for impregnation of the HCP polymer of formula (II) with a solution of an activating agent in a solvent, in which the ratio of activating agent to polymer lies between 0.5:1 and 8:1. Preferably the reaction mixture is kept stirred for a time of between 10 minutes and 18 hours. Preferably the ratio of activating agent to polymer lies between 3:1 and 4:1.

According to a preferred embodiment of the method according to the invention the activating heat treatment is carried out at a temperature within the range from 500 to 950°C, preferably at a temperature within the range from 700 to 900°C, and even more preferably at a temperature within the range from 750 to 800°C.

According to a preferred embodiment of the method according to the invention the activating agent is selected from potassium hydroxide (KOH), sodium hydroxide (NaOH), potassium carbonate (K₂CO₃), sodium carbonate (Na₂CO₃), zinc chloride (ZnCl₂) or phosphoric acid (H₃PO₄). A particularly preferred activating agent is potassium hydroxide (KOH).

Examples of suitable solvents for mixing the activating agent for use in the method of preparation according to the invention are water, ethanol, methanol, acetonitrile, tetrahydrofuran and dimethylformamide, or mixtures of those solvents with water up to 50% v/v. The most preferred solvents are water and ethanol, or a mixture of these up to 50% v/v.

According to a preferred embodiment of the method according to the invention the concentration of activating agent in the solvent, expressed as molarity (mol/L), lies within the range between 0.01 M and 22 M.

According to another preferred embodiment of the method according to the invention the mixture is dewatered by distillation on a Rotavapor at a temperature of between 25°C and 160°C, or a flow of inert gas (nitrogen or argon) for a time of between 0 minutes and 18 hours.

According to yet another preferred embodiment of the method according to the invention the activating treatment is carried out under a flow of inert gas, in which the gas is preferably selected from N₂ and Ar.

According to yet another preferred embodiment of the method according to the invention, once the activation temperature has been reached, isothermal conditions are maintained for a time of between 10 minutes and 5 hours. The preferred time is 60 minutes. According to yet another preferred embodiment of the method according to the invention the heating gradient is between 0.1°C/min and 50°C/min.

According to yet another preferred embodiment of the method according to the invention the carbonaceous product is washed with water, hydrochloric acid (HCl) in a concentration of between 0.5 M and 5 M, and again with water to neutral pH.

A detailed description of the structural properties and porosity of the microporous carbon according to this invention, made with reference to its preferred embodiments, is provided in the following examples, with reference to the appended drawings, in which:
Figure 1. Adsorption isotherms - desorption of N₂ at 77K (A) and pore distributions (B) for samples UPO-7 (circles) and C-UPO-1 (triangles).
Figure 2. Adsorption isotherms - desorption of N₂ at 77K (A) and pore distributions (B) for samples UPO-7 (circles) and C-UPO-2 (triangles).
Figure 3. Adsorption isotherms - desorption of N₂ at 77K (A) and pore distributions (B) for samples UPO-9 (circles) and C-UPO-3 (triangles).
Figure 4. Adsorption isotherms - desorption of N₂ at 77K (A) and pore distributions (B) for samples UPO-21 (circles) and C-UPO-4 (triangles).
Figure 5. Adsorption isotherms - desorption of N₂ at 77K (A) and pore distributions (B) for samples UPO-22 (circles) and C-UPO-5 (triangles).
Figure 6. Adsorption isotherms - desorption of N₂ at 77K (A) and pore distributions (B) for samples UPO-23 (circles) and C-UPO-6 (triangles).
Figure 7. Adsorption isotherms - desorption of N₂ at 77K (A) and pore distributions (B) for samples UPO-24 (circles) and C-UPO-7 (triangles).
Figure 8. Adsorption isotherms - desorption of N₂ at 77K (A) and pore distributions (B) for samples UPO-23 (circles) and C-UPO-8 (triangles).

The following examples are illustrative and do not restrict the scope of the invention as defined in the appended claims.

### Examples

A number of specific examples of synthesis procedures and post-synthesis heat treatment are provided below.

### Synthesis of the hyper-cross-linked polymer UPO-7 and subsequent carbonization:

Ferric chloride (4.055 g, 0.025 mol) and tetraphenylmethane (TPM 1 g, 0.0031 mol) were suspended in dichloromethane (DCE, 135 ml). The resulting mixture was vigorously stirred at ambient temperature to obtain a uniform solution and then formaldehyde dimethylacetal (FDA) (1.90 g, 0.025 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-7 (so described in European Patent Application no. EP15425022). 1 g of UPO-7 material was added to a 1 M solution of KOH in ethanol (95% v/v in water) with a material : KOH ratio of 1:4 by weight, and left stirring overnight. Subsequently the mixture was dewatered under vacuum at 50°C and the solid was placed in an alumina crucible, which was in turn placed inside a quartz tube. Carbonization was carried out under a flow of nitrogen with a temperature gradient of 2°C/min up to the temperature of 750°C and held under isothermal conditions at 750°C for 60 minutes. After carbonization the material obtained was washed with deionized water, 2 M HCl and with successive wash cycles with deionized water to neutral pH. The resulting material was dried in a stove at 110°C for 18 hours (sample described as C-UPO-1).

### Synthesis of the hyper-cross-linked polymer UPO-7 and subsequent carbonization:

Ferric chloride (4.055 g, 0.025 mol) and tetraphenylmethane (TPM 1 g, 0.0031 mol) were suspended in dichloromethane (DCE, 135 ml). The resulting mixture was vigorously stirred at ambient temperature to obtain a uniform solution and then formaldehyde dimethylacetal (FDA) (1.90 g, 0.025 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-7 (so described in European Patent Application no. EP15425022). 1 g of UPO-7 material was added to a 1 M solution of KOH in ethanol (95% v/v in water) with a material : KOH ratio of 1:4 by weight, and left stirring overnight. Subsequently the mixture was dewatered under vacuum at 50°C and the solid was placed in an alumina crucible, which was in turn placed inside a quartz tube. Carbonization was carried out under a flow of nitrogen with a temperature gradient of 2°C/min up to the temperature of 800°C and held under isothermal conditions at 800°C for 60 minutes. After carbonization the material obtained was washed with deionized water, 2 M HCl and with successive wash cycles with deionized water to neutral pH. The resulting material was dried in a stove at 110°C for 18 hours (sample described as C-UPO-2).

### Synthesis of the hyper-cross-linked polymer UPO-9 and subsequent carbonization:

Ferric chloride (4.055 g, 0.025 mol) and tetraphenylmethane (TPM 1 g, 0.0031 mol) were suspended in dichloromethane (DCE, 13.5 ml). The resulting mixture was vigorously stirred at ambient temperature to obtain a uniform solution and then formaldehyde dimethylacetal (FDA) (1.90 g, 0.025 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-9 (so described in European Patent Application no. EP15425022). 1 g of UPO-9 material was added to a 1 M solution of KOH in ethanol (95% v/v in water) with a material : KOH ratio of 1:4 by weight, and left stirring overnight. Subsequently the mixture was dewatered under vacuum at 50°C and the solid was placed in an alumina crucible, which was in turn placed inside a quartz tube. Carbonization was carried out under a flow of nitrogen with a temperature gradient of 2°C/min up to the temperature of 750°C and held under isothermal conditions at 750°C for 60 minutes. After carbonization the material obtained was washed with deionized water, 2 M HCl and with successive wash cycles with deionized water to neutral pH. The resulting material was dried in a stove at 110°C for 18 hours (sample described as **C-UPO-3**).

### Synthesis of the hyper-cross-linked polymer UPO-21 and subsequent carbonization:

Ferric chloride (5.84 g, 0.036 mol) and tetraphenyladamantane (TPA 1 g, 0.0023 mol) were suspended in dichloromethane (DCE, 135 ml). The resulting mixture was vigorously stirred at ambient temperature to obtain a uniform solution and then formaldehyde dimethylacetal (FDA, 2.76 g, 0.036 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-21. 1 g of UPO-21 material was added to a 6 M solution of KOH in water with a material : KOH ratio of 1:3 by weight, and left stirring for 5 hours. Subsequently the mixture was placed in an alumina crucible, which was in turn placed inside a quartz tube. Carbonization was carried out under a flow of nitrogen with a temperature gradient of 2°C/min up to the temperature of 800°C and held under isothermal conditions at 800°C for 120 minutes. After carbonization the material obtained was washed with deionized water, 2 M HCl and with successive wash cycles with deionized water to neutral pH. The resulting material was dried in a stove at 110°C for 18 hours (sample described as **C-UPO-4**).

### Synthesis of hyper-cross-linked polymer UPO-22 and subsequent carbonization:

Ferric chloride (7.78 g, 0.048 mol) and tetraphenylsilane (TPS 1 g, 0.003 mol) were suspended in dichloromethane (DCE, 135 ml). The resulting mixture was vigorously stirred at ambient temperature to obtain a clear solution and then formaldehyde dimethylacetal (FDA, 3.65 g, 0.048 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-22. 1 g of UPO-22 material was added to a 6 M solution of KOH in water with a material : KOH ratio of 1:3 by weight, and left stirring for 5 hours. Subsequently the mixture was placed in an alumina crucible, which was in turn placed inside a quartz tube. Carbonization was carried out under a flow of nitrogen with a temperature gradient of 2°C/min up to the temperature of 800°C and held under isothermal conditions at 800°C for 120 minutes. After carbonization the material obtained was washed with deionized water, 2 M HCl and with successive wash cycles with deionized water to neutral pH. The resulting material was dried in a stove at 110°C for 18 hours (sample described as **C-UPO-5**).

### Synthesis of the hyper-cross-linked polymer UPO-23 and subsequent carbonization:

Ferric chloride (7.78 g, 0.048 mol) and 1,1,2,2-tetraphenylethane (TPEa 1 g, 0.003 mol) were suspended in dichloromethane (DCE, 135 ml). The resulting mixture was vigorously stirred at ambient temperature to obtain a clear solution and then formaldehyde dimethylacetal (FDA, 3.65 g, 0.048 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-23. 1 g of UPO-23 material was added to a 6 M solution of KOH in water with a material : KOH ratio of 1:3 by weight, and left stirring for 5 hours. Subsequently the mixture was placed in an alumina crucible, which was in turn placed inside a quartz tube. Carbonization was carried out under a flow of nitrogen with a temperature gradient of 2°C/min up to the temperature of 800°C and held under isothermal conditions at 800°C for 120 minutes. After carbonization the material obtained was washed with deionized water, 2 M HCl and with successive wash cycles with deionized water to neutral pH. The resulting material was dried in a stove at 110°C for 18 hours (sample described as **C-UPO-6**).

### Synthesis of the hyper-cross-linked polymer UPO-24 and subsequent carbonization:

Ferric chloride (4.055 g, 0.025 mol) and tetraphenylmethane (TPM 1 g, 0.0031 mol) were suspended in dichloromethane (DCE, 23 ml). The resulting mixture was vigorously stirred at ambient temperature to obtain a uniform solution and then formaldehyde dimethylacetal (FDA) (1.90 g, 0.025 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-24. 1 g of UPO-24 material was added to a 1 M solution of KOH in ethanol (95% v/v in water) with a material : KOH ratio of 1:4 by weight, and left stirring overnight. Subsequently the mixture was dewatered under vacuum at 50°C and the solid was placed in an alumina crucible, which was in turn placed inside a quartz tube. Carbonization was carried out under a flow of nitrogen with a temperature gradient of 2°C/min up to the temperature of 750°C and held under isothermal conditions at 750°C for 60 minutes. After carbonization the material obtained was washed with deionized water, 2 M HCl and with successive wash cycles with deionized water to neutral pH. The resulting material was dried in a stove at 110°C for 18 hours (sample described as **C-UPO-7**).

### Synthesis of the hyper-cross-linked polymer UPO-23 and subsequent carbonization:

Ferric chloride (7.78 g, 0.048 mol) and 1,1,2,2-tetraphenylethane (TPEa 1 g, 0.003 mol) were suspended in dichloromethane (DCE, 135 ml). The resulting mixture was vigorously stirred at ambient temperature to obtain a clear solution and then formaldehyde dimethylacetal (FDA, 3.65 g, 0.048 mol) was added dropwise. The resulting dense gel was stirred at ambient temperature for 4 hours and then heated under reflux for 17 hours. After cooling to ambient temperature the gel was diluted with ethanol and washed several times with water until the pH became neutral, and finally dried in a stove overnight at 100°C.

The material obtained is referred to as UPO-23. 1 g of UPO-23 material was added to a 1 M solution of KOH in ethanol (95% v/v in water) with a material : KOH ratio of 1:4 by weight, and left stirring overnight. Subsequently the mixture was dewatered under vacuum at 50°C and the solid was placed in an alumina crucible, which was in turn placed inside a quartz tube. Carbonization was carried out under a flow of nitrogen with a temperature gradient of 2°C/min up to the temperature of 750°C and held under isothermal conditions at 750°C for 60 minutes. After carbonization the material obtained was washed with deionized water, 2 M HCl and with successive wash cycles with deionized water to neutral pH. The resulting material was dried in a stove at 110°C for 18 hours (sample described as **C-UPO-8**).

### Analysis of porosities

Textural analysis relating to both specific surface area and pore size distribution in the samples was obtained by physisorption of N₂. Measurement was carried out at low temperatures (77K), and at increasing pressure values of between 10⁻⁷ and 1 bar.

Before carrying out the measurements the samples were pretreated at 150°C for 18 hours under high vacuum. As a comparison the pore distributions of the materials before chemical activation were also reported. BET surface areas were calculated within the pressure range P/P₀ = 0.05-0.15, and pore size distributions were calculated using the "Quenched Solid Density Functional Theory" (QSDFT) procedure on carbon surfaces with a slit/cylinder geometry applied to the adsorption branch.

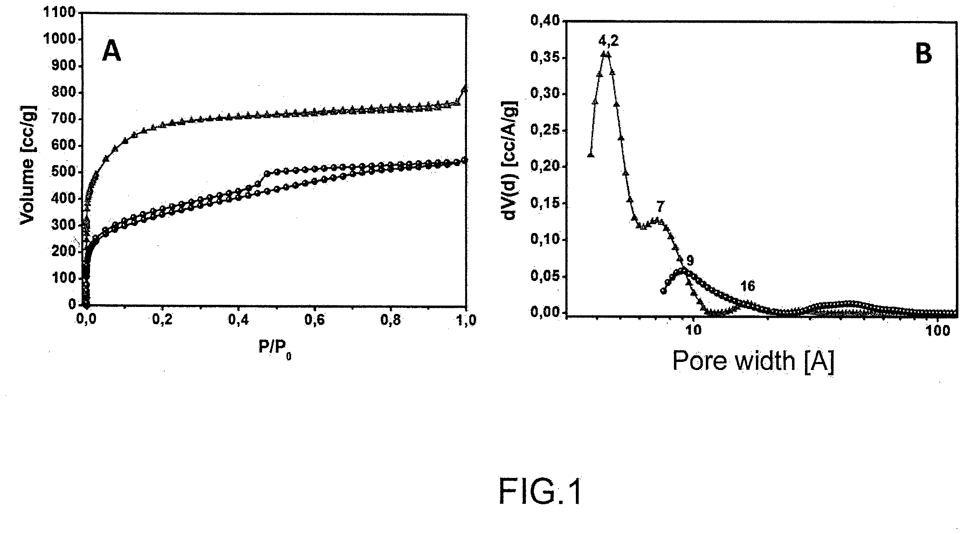

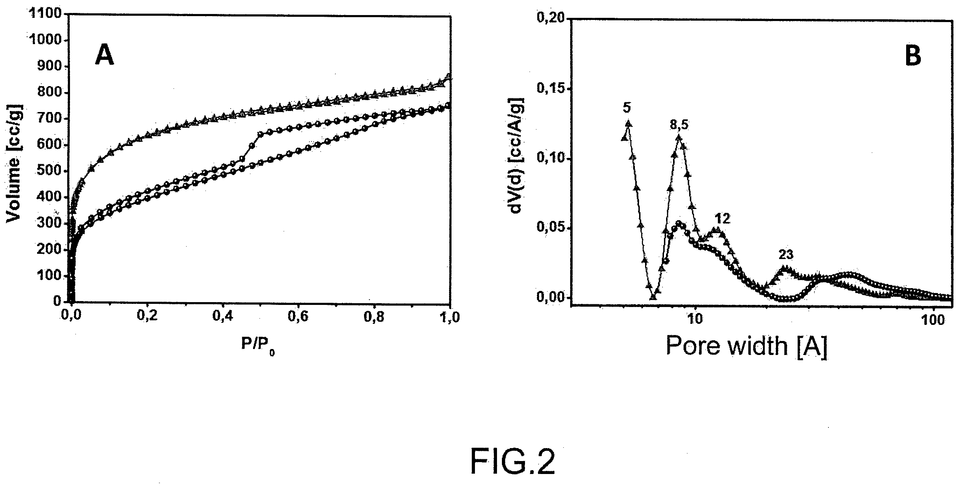

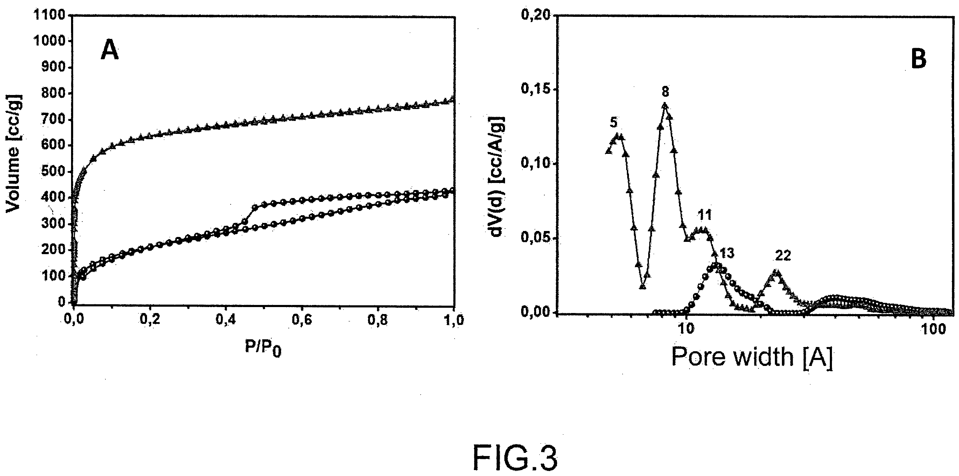

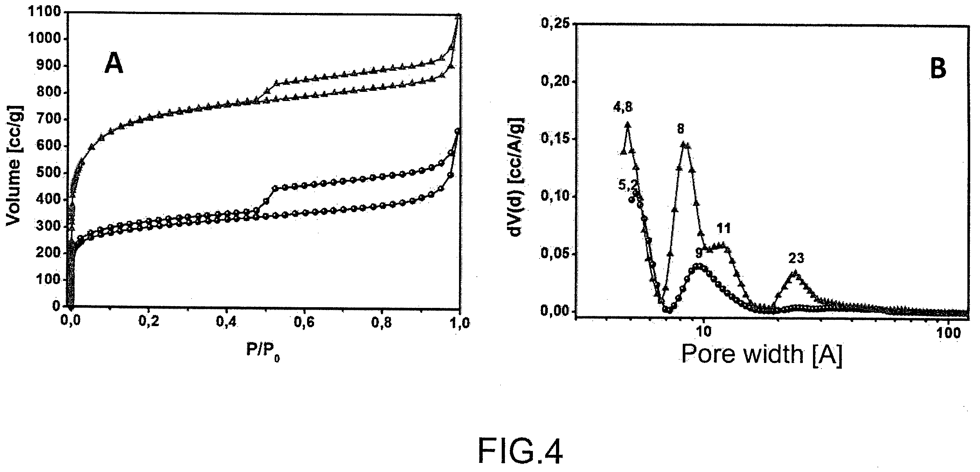

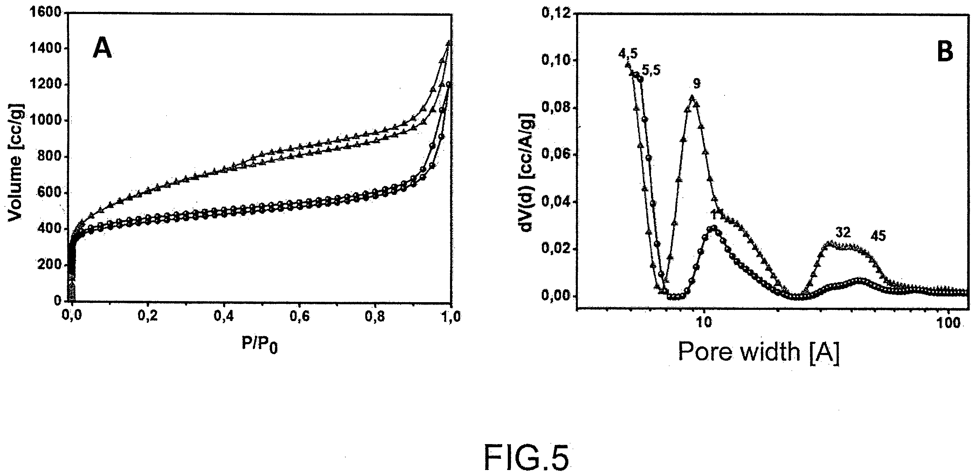

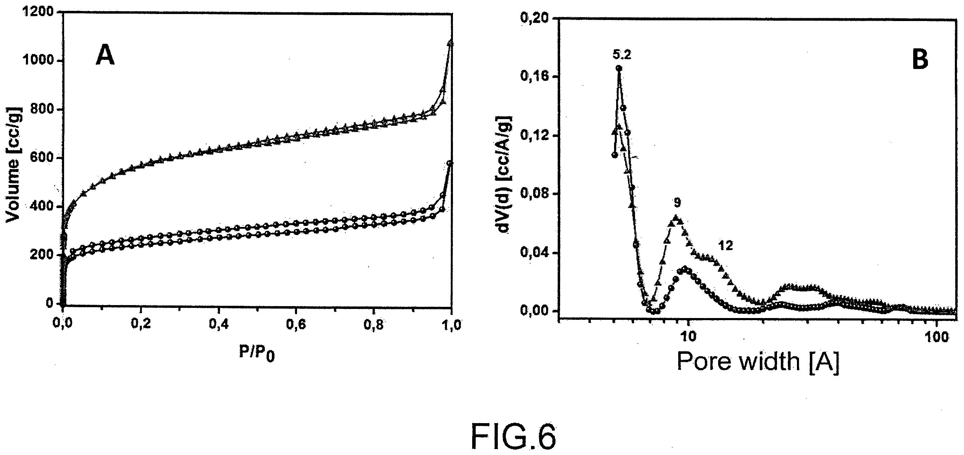

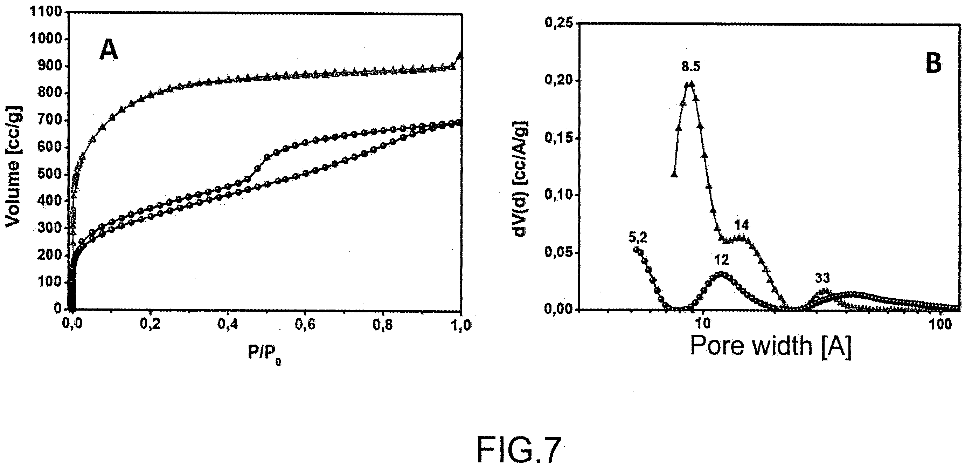

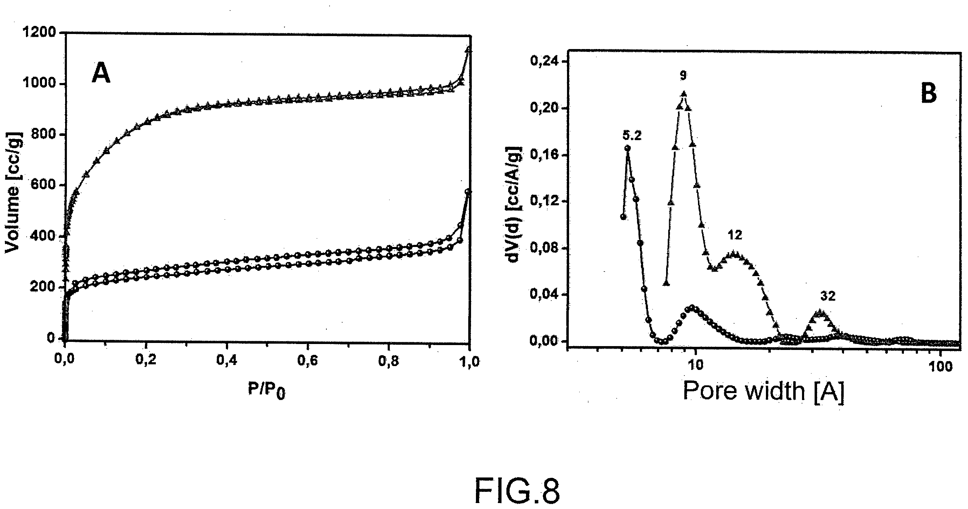

The N₂ adsorption-desorption isotherms at 77K (Tables A) and the pore distributions (Tables B) for the microporous carbons before carbonization (circles) and after carbonization (triangles) are shown in Figures 1-8.

All the isotherms show a net increase in the quantity of gas adsorbed after the carbonization process, particularly at low pressures (400-700 cm³/g). The profiles of the adsorption isotherms show a pseudo-Langmuir adsorption isotherm for samples C-UPO-1, C-UPO-2 and C-UPO-3; this shows that the resulting carbons are wholly microporous, unlike the starting polymers which also have mesoporosity as revealed by the presence of hysteresis peaks in the pressure range P/P₀ 0.45-1. Carbons C-UPO-4, C-UPO-5, C-UPO-6, C-UPO-7 and C-UPO-8, which also show mesoporosity, behave differently.

The surface areas after carbonization are all increased, as is the total pore volume, as shown in Table 1.

The pore distributions obtained after activation are mostly characterized by the appearance of ultramicropores of dimensions 5 Å or below. The microporous carbons present in the literature obtained from 3D polymers comparable to the hyper-cross-linked polymers (like the UPO-n) show the opposite behaviour: one example is provided by carbonized PAFs (Porous Aromatic Frameworks) [Li, Y.; Ben, T.; Zhang, B.; Fu, Y.; Qiu, S. Scientific Reports, 2013, 3, 2420], which are characterized by a fall in surface area and total pore volume following activating treatment, while the pore distribution remains almost microporous with a family of pores in the range 8-14 Å.

It will be noted that in carbons C-UPO-1, C-UPO-2 and C-UPO-3 deriving from polymers prepared from the precursor TPM the microporous volume is more than 60% of the total. These carbons are mainly characterized by families of ultramicropores smaller than 5 Å and families of micropores lying within the range 8-14 Å, which nevertheless have appreciable importance for the storage of gas. A particularly promising carbon is C-UPO-1, which is characterized by a microporous volume of 1.02 Å, of which 4.5 Å ultramicropores represent a percentage of more than 65% of the total micropore volume. This material is greatly indicated for the storage of hydrogen, carbon dioxide and methane at low pressures.

The carbons obtained from polymers deriving from precursors other than TPM (C-UPO-4, C-UPO-5 and C-UPO-6) are also characterized by families of ultramicropores smaller than 5 Å, and families of micropores lying within the range 8-14 Å.

Finally, carbons C-UPO-7 and C-UPO-8 do not have the family of ultramicropores and are characterized by small micropores of around 9 Å. However these are characterized by higher surface area and micropore volume in the C-UPO-1-8 series of carbons.

**Table 1. Surface area and pore volume properties of the starting materials (UPO-n) and after carbonization (C-UPO-n); a) the surface area is calculated from the adsorption isotherm of nitrogen at 77K using the BET method; b) total pore volume at the pressure P/P₀ = 0.995; c) the micropore volume was determined using the "Quenched Solid Density Functional Theory" (QSDFT) model on a carbon surface with a slit/cylinder geometry applied to the adsorption branch.**

| **Sample** | **Precursor** | **Precursor: FDA ratio (mol)** | **Activation temperature (OC)** | **SSA BET^{(a)} [m²/g]** | **V TOTAL^{(b)} [cc/g]** | **V MICRO(c) [cc/g]** | | |
|---|---|---|---|---|---|---|---|---|
| | | | | | | **<7Å** | **7<Å<20** | **Total** |
| **UPO-7** | TPM | 1:8 | -- | 1435 | 1.09 | -- | 0.31 | 0.31 |
| **C-UPO-1** | **UPO-7** | -- | **750** | **2527** | **1.09** | **0.69** | **0.33** | **1.02** |
| **UPO-7** | TPM | 1:8 | -- | 1435 | 1.09 | -- | 0.31 | 0.31 |
| **C-UPO-2** | **UPO-7** | -- | **800** | **2318** | **1.21** | **0.14** | **0.5** | **0.64** |
| **UPO-9** | TPM | 1:8 | -- | 793 | 0.61 | -- | 0.18 | 0.18 |
| **C-UPO-3** | **UPO-9** | -- | **750** | **2396** | **1.11** | **0.20** | **0.51** | **0.71** |
| **UPO-21** | TPA | 1:16 | -- | 1115 | 0.72 | 0.16 | 0.18 | 0.34 |
| **C-UPO-4** | **UPO-21** | -- | **800** | **2641** | **1.30** | **0.19** | **0.55** | **0.74** |
| **UPO-22** | TPS | 1:16 | -- | 1000 | 1.06 | 0.13 | 0.15 | 0.28 |
| **C-UPO-5** | **UPO-22** | -- | **800** | **2190** | **1.72** | **0.14** | **0.43** | **0.57** |
| **UPO-23** | TPEa | 1:16 | -- | 962 | 0.59 | 0.15 | 0.12 | 0.27 |
| **C-UPO-6** | **UPO-23** | -- | **800** | **2055** | **1.20** | **0.20** | **0.35** | **0.55** |
| **UPO-24** | TPM | 1:8 | -- | 1300 | 1.02 | 0.094 | 0.176 | 0.27 |
| **C-UPO-7** | **UPO-24** | -- | **750** | **2900** | **1.29** | **--** | **1.05** | **1.05** |
| **UPO-23** | TPEa | 1:16 | -- | 962 | 0.59 | 0.15 | 0.12 | 0.27 |
| **C-UPO-8** | **UPO-23** | -- | **750** | **3099** | **1.45** | **--** | **1.08** | **1.08** |

In conclusion, these results show that the process of carbonization of the hyper-cross-linked polymers obtained from materials with different aromatic tetrahedral precursors and different reaction ratios (precursor: FDA) results in microporous carbons having increased BET surface area, total pore volume and micropore volume. The increase in surface area and micropore volume and above all the presence of ultramicropores and supermicropores of small size render these new carbons very suitable for the storage of gases such as methane, hydrogen and carbon dioxide, above all at low pressures.

## Claims

1. A method of preparing a microporous carbon, comprising the step of subjecting a hyper-cross-linked polymer of formula (II): 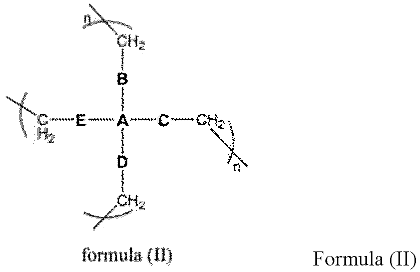
wherein A is selected from a C atom, a Si atom, a Ge atom, a Sn atom, an adamantane group, an ethane group and an ethene group, and in which each of B, C, D and E is a ring structure selected from the radicals of the compounds benzene, naphthalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl and alkynyl groups, and in which n is an integer comprised between 200 and 6000, to a heat carbonization treatment at a temperature comprised within the range of from 500 to 950°C, in the presence of an activating agent in a solvent,
wherein the obtained microporous carbon is **characterized by** an increased BET surface area and an increased quantity of micropores having a pore size below 7Å as compared to the hyper-cross-linked polymer of Formula (II) before carbonization, wherein the BET surface area and quantity of micropores having a pore size below 7Å are measured as disclosed in the description.

2. The method according to Claim 1, wherein the activating agent is selected from the group consisting of potassium hydroxide (KOH), sodium hydroxide (NaOH), potassium carbonate (K₂CO₃), sodium carbonate (Na₂CO₃), chloride zinc (ZnCl₂), and phosphoric acid (H₃PO₄).

3. The method according to Claim 1 or 2, wherein the weight ratio between the activating agent and the hyper-cross-linked polymer of formula (II) is comprised between 0.5:1 and 8:1, preferably between 3:1 and 4:1.

4. The method according to any of Claims 1 to 3, wherein the carbonization heat treatment is carried out at a temperature in the range of from 700 to 900°C, preferably at a temperature in the range of from 750 to 800°C.

5. The method according to any of Claims 1 to 4, wherein the solvent for the activating agent is selected from the group consisting of water, ethanol, methanol, acetonitrile, tetrahydrofuran, dimethylformamide and mixtures thereof.

6. The method according to any of Claims 1 to 5, wherein the concentration of the activating agent in the solvent is comprised within the range of from 0.01 M to 22 M.

7. The method according to any of Claims 1 to 6, wherein the carbonization heat treatment is carried out for a time comprised between 10 minutes and 5 hours, under an inert gas stream.

8. The method according to any of Claims 1 to 7, wherein the hyper-cross-linked polymer of formula (II) as defined in Claim 1 is prepared by the reaction of a monomer of formula (I): 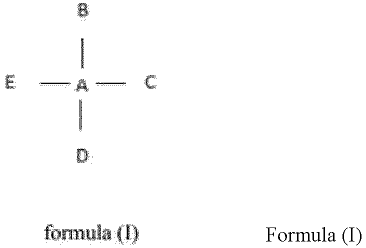 wherein A is selected from a C atom, a Si atom, a Ge atom, a Sn atom, an adamantane group, an ethane and an ethene group, and in which each of B, C, D and E is a ring structure selected from the monovalent radicals of the compounds benzene, naphthalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl and alkynyl groups, with a Friedel-Crafts catalyst in an aprotic organic solvent and with formaldehyde dimethyl acetal (FDA) as a cross-linking agent.

9. The method according to Claim 8, wherein the concentration of the monomer of formula (I) in the aprotic organic solvent is in the range of from 0.001 to 0.6 M.

10. The method according to Claim 8 or 9, wherein the aprotic organic solvent is selected from the group consisting of dichloroethane (DCE), toluene, benzene, nitromethane (CH₃NO₂), carbon disulfide and chlorobenzene.

11. The method according to any of Claims 8 to 10, wherein the Friedel-Crafts catalyst is selected from the group consisting of BF₃, BeCl₂, TiCl₄, SbCl₅, SnCl₄, FeCl₃, AlCl₃, Sc(OTf)₃, Mo(CO)₆, SeCl₄, TeCl₄, sulfuric acid, hydrofluoric acid and super acids.

12. The method according to any of Claims 8 to 11, wherein the molar ratio of the monomer of formula (I) to the FDA is in the range of from 1:3 to 1:40.

13. A microporous carbon obtainable by carbonization of a hyper-cross-linked polymer of Formula (II): 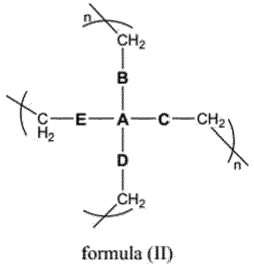
wherein A is selected from a C atom, a Si atom, a Ge atom, a Sn atom, an adamantane group, an ethane group and an ethene group, and in which each of B, C, D and E is a ring structure selected from the radicals of the compounds benzene, naphthalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl and alkynyl groups, and in which n is an integer comprised between 200 and 6000,
wherein carbonization is carried out according to the method of any of Claims 1 to 12,
the microporous carbon being **characterized by** an increased BET surface area and an increased quantity of micropores having a pore size below 7Å as compared to the hyper-cross-linked polymer of Formula (II) before carbonization, wherein the BET surface area and quantity of micropores having a pore size below 7Å are measured as disclosed in the description.

14. Use of the microporous carbon according to Claim 13, for storing hydrogen, methane or carbon dioxide.

## Patentansprüche

1. Verfahren zur Herstellung eines mikroporösen Kohlenstoffs, umfassend den Schritt des Unterziehens eines hypervernetzten Polymers der Formel (II): 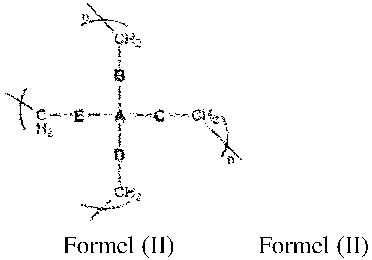
wobei A ausgewählt ist aus einem C-Atom, einem Si-Atom, einem Ge-Atom, einem Sn-Atom, einer Adamantangruppe, einer Ethangruppe und einer Ethengruppe, und worin es sich bei B, C, D und E jeweils um eine Ringstruktur handelt, die ausgewählt ist aus den Resten der Verbindungen Benzol, Naphthalin, Anthracen, Phenanthren, Pyren, gegebenenfalls mit einem oder mehreren Substituenten, ausgewählt aus Nitro-, Amino-, Hydroxyl-, Sulfonyl-, Halogen-, Phenyl-, Alkyl-, Halogenalkyl-, Hydroxyalkyl-, Aminoalkyl-, Aryl-, Alkenyl- und Alkinylgruppen, und worin n eine ganze Zahl zwischen 200 und 6000 ist, einer Karbonisierungs-Wärmebehandlung bei einer Temperatur in einem Bereich von 500 bis 950 °C in Gegenwart eines Aktivierungsmittels in einem Lösungsmittel,
wobei der erhaltene mikroporöse Kohlenstoff durch eine erhöhte BET-Oberfläche und eine erhöhte Menge an Mikroporen, die eine Porengröße unter 7 Å aufweisen, gekennzeichnet ist, im Vergleich zu dem hypervernetzten Polymer von Formel (II) vor der Karbonisierung, wobei die BET-Oberfläche und die Menge an Mikroporen, die eine Porengröße unter 7 Å aufweisen, wie in der Beschreibung offenbart gemessen werden.

2. Verfahren nach Anspruch 1, wobei das Aktivierungsmittel aus der Gruppe ausgewählt ist, die aus Kaliumhydroxid (KOH), Natriumhydroxid (NaOH), Kaliumcarbonat (K₂CO₃), Natriumcarbonat (Na₂CO₃), Zinkchlorid (ZnCl₂) und Phosphorsäure (H₃PO₄) besteht.

3. Verfahren nach Anspruch 1 oder 2, wobei das Gewichtsverhältnis zwischen dem Aktivierungsmittel und dem hypervernetzten Polymer von Formel (II) zwischen 0,5 : 1 und 8 : 1, vorzugsweise zwischen 3 : 1 und 4 : 1 liegt.

4. Verfahren nach einem der Ansprüche 1 bis 3, wobei die Karbonisierungs-Wärmebehandlung bei einer Temperatur im Bereich von 700 bis 900 °C, vorzugsweise bei einer Temperatur im Bereich von 750 bis 800 °C, durchgeführt wird.

5. Verfahren nach einem der Ansprüche 1 bis 4, wobei das Lösungsmittel für das Aktivierungsmittel aus der Gruppe bestehend aus Wasser, Ethanol, Methanol, Acetonitril, Tetrahydrofuran, Dimethylformamid und Mischungen davon ausgewählt ist.

6. Verfahren nach einem der Ansprüche 1 bis 5, wobei die Konzentration des Aktivierungsmittels in dem Lösungsmittel in einem Bereich von 0,01 M bis 22 M liegt.

7. Verfahren nach einem der Ansprüche 1 bis 6, wobei die Karbonisierungs-Wärmebehandlung für eine Zeit zwischen 10 Minuten und 5 Stunden unter einem Inertgasstrom durchgeführt wird.

8. Verfahren nach einem der Ansprüche 1 bis 7, wobei das hypervernetzte Polymer von Formel (II), wie in Anspruch 1 definiert, durch die Reaktion eines Monomers der Formel (I) hergestellt wird: 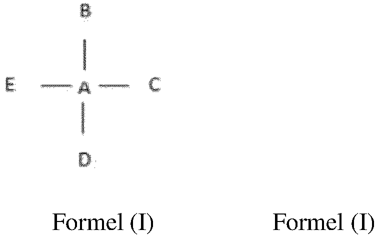 wobei A ausgewählt ist aus einem C-Atom, einem Si-Atom, einem Ge-Atom, einem Sn-Atom, einer Adamantangruppe, einer Ethangruppe und einer Ethengruppe, und worin es sich bei B, C, D und E jeweils um eine Ringstruktur handelt, die ausgewählt ist aus den einwertigen Resten der Verbindungen Benzol, Naphthalin, Anthracen, Phenanthren, Pyren, gegebenenfalls mit einem oder mehreren Substituenten, die aus Nitro-, Amino-, Hydroxyl-, Sulfonyl-, Halogen-, Phenyl-, Alkyl-, Halogenalkyl-, Hydroxyalkyl-, Aminoalkyl-, Aryl-, Alkenyl- und Alkinylgruppen ausgewählt sind, mit einem Friedel-Crafts-Katalysator in einem aprotischen organischen Lösungsmittel und mit Formaldehyddimethylacetal (FDA) als Vernetzungsmittel.

9. Verfahren nach Anspruch 8, wobei die Konzentration des Monomers der Formel (I) in dem aprotischen organischen Lösungsmittel im Bereich von 0,001 bis 0,6 M liegt.

10. Verfahren nach Anspruch 8 oder 9, wobei das aprotische organische Lösungsmittel aus der Gruppe bestehend aus Dichlorethan (DCE), Toluol, Benzol, Nitromethan (CH₃NO₂), Schwefelkohlenstoff und Chlorbenzol ausgewählt ist.

11. Verfahren nach einem der Ansprüche 8 bis 10, wobei der Friedel-Crafts-Katalysator aus der Gruppe bestehend aus BF₃, BeCl₂, TiCl₄, SbCl₅, SnCl₄, FeCl₃, AlCl₃, Sc(OTf)₃, Mo(CO)₆, SeCl₄, TeCl₄, Schwefelsäure, Flusssäure und Supersäuren ausgewählt ist.

12. Verfahren nach einem der Ansprüche 8 bis 11, wobei das Molverhältnis des Monomers von Formel (I) zu dem FDA im Bereich von 1 : 3 bis 1 : 40 liegt.

13. Mikroporöser Kohlenstoff, der durch Carbonisierung eines hypervernetzten Polymers der Formel (II) erhalten wird: 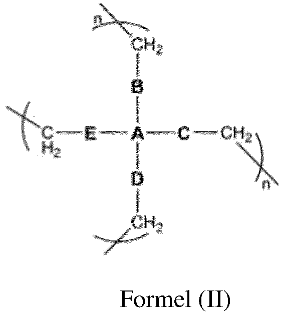
wobei A ausgewählt ist aus einem C-Atom, einem Si-Atom, einem Ge-Atom, einem Sn-Atom, einer Adamantangruppe, einer Ethangruppe und einer Ethengruppe, und worin es sich bei B, C, D und E jeweils um eine Ringstruktur handelt, die ausgewählt ist aus den Resten der Verbindungen Benzol, Naphthalin, Anthracen, Phenanthren, Pyren, gegebenenfalls mit einem oder mehreren Substituenten, ausgewählt aus Nitro-, Amino-, Hydroxyl-, Sulfonyl-, Halogen-, Phenyl-, Alkyl-, Halogenalkyl-, Hydroxyalkyl-, Aminoalkyl-, Aryl-, Alkenyl- und Alkinylgruppen, und worin n eine ganze Zahl zwischen 200 und 6000 ist,
wobei die Karbonisierung nach dem Verfahren eines der Ansprüche 1 bis 12 durchgeführt wird, wobei der mikroporöse Kohlenstoff durch eine erhöhte BET-Oberfläche und eine erhöhte Menge an Mikroporen, die eine Porengröße unter 7 Å aufweisen, gekennzeichnet ist, im Vergleich zu dem hypervernetzten Polymer von Formel (II) vor der Karbonisierung, wobei die BET-Oberfläche und die Menge an Mikroporen, die eine Porengröße unter 7 Å aufweisen, wie in der Beschreibung offenbart gemessen werden.

14. Verwendung des mikroporösen Kohlenstoffs nach Anspruch 13 zur Speicherung von Wasserstoff, Methan oder Kohlendioxid.

## Revendications

1. Procédé de préparation d'un carbone microporeux, comprenant l'étape de soumission d'un polymère hyper-réticulé de formule (II) : 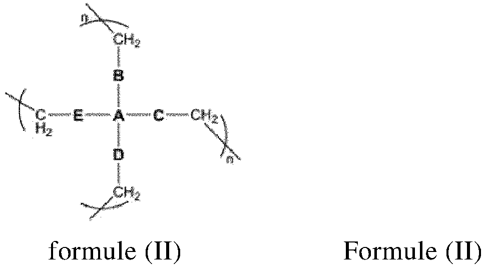
dans lequel A est sélectionné parmi un atome C, un atome Si, un atome Ge, un atome Sn, un groupe adamantane, un groupe éthane et un groupe éthène, et dans laquelle chacun de B, C, D et E est une structure cyclique sélectionnée parmi les radicaux des composés benzène, naphtalène, anthracène, phénanthrène, pyrène, présentant éventuellement un ou plusieurs substituants sélectionnés parmi les groupes nitro, amino, hydroxyle, sulfonyle, halogène, phényle, alkyle, haloalkyle, hydroxyalkyle, aminoalkyle, aryle, alcényle et alcynyle, et dans laquelle n est un entier compris entre 200 et 6 000, à un traitement de carbonisation thermique à une température comprise dans la plage de 500 à 950 °C, en présence d'un agent activateur dans un solvant,
dans lequel le carbone microporeux obtenu est **caractérisé par** une surface BET accrue et une quantité accrue de micropores présentant une taille de pores au-dessous de 7 Å par comparaison au polymère hyper-réticulé de Formule (II) avant carbonisation, dans lequel la surface BET et la quantité de micropores présentant une taille de pores au-dessous de 7 Â sont mesurées tel que divulgué dans la description.

2. Procédé selon la revendication 1, dans lequel l'agent activateur est sélectionné parmi le groupe consistant en l'hydroxyde de potassium (KOH), l'hydroxyde de sodium (NaOH), le carbonate de potassium (K₂CO₃), le carbonate de sodium (Na₂CO₃), le chlorure de zinc (ZnCl₂) et l'acide phosphorique (H₃PO₄).

3. Procédé selon la revendication 1 ou 2, dans lequel le rapport pondéral entre l'agent activateur et le polymère hyper-réticulé de formule (II) est compris entre 0,5:1 et 8:1, de préférence entre 3:1 et 4:1.

4. Procédé selon l'une quelconque des revendications 1 à 3, dans lequel le traitement thermique de carbonisation est réalisé à une température dans la plage allant de 700 à 900 °C, de préférence à une température dans la plage allant de 750 à 800 °C.

5. Procédé selon l'une quelconque des revendications 1 à 4, dans lequel le solvant pour l'agent activateur est sélectionné dans le groupe consistant en l'eau, l'éthanol, le méthanol, l'acétonitrile, le térahydrofurane, le diméthylformamide et un de leurs mélanges.

6. Procédé selon l'une quelconque des revendications 1 à 5, dans lequel la concentration de l'agent activateur dans le solvant est comprise dans la plage allant de 0,01 M à 22 M.

7. Procédé selon l'une quelconque des revendications 1 à 6, dans lequel le traitement thermique de carbonisation est mis en oeuvre pendant une durée comprise entre 10 minutes et 5 heures, sous un flux de gaz inerte.

8. Procédé selon l'une quelconque des revendications 1 à 7, dans lequel le polymère hyper-réticulé de formule (II) tel que défini en revendication 1 est préparé par la réaction d'un monomère de formule (I) : 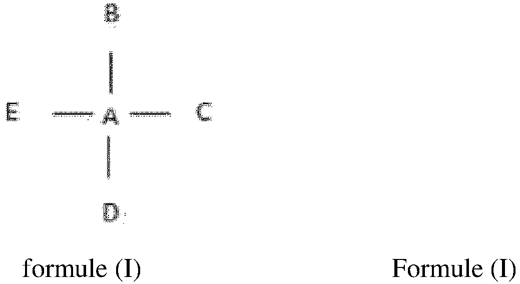 dans lequel A est sélectionné parmi un atome C, un atome Si, un atome Ge, un atome Sn, un groupe adamantane, un groupe éthane et un groupe éthène, et dans laquelle chacun de B, C, D et E est une structure cyclique sélectionnée parmi les radicaux monovalents des composés benzène, naphtalène, anthracène, phénanthrène, pyrène, présentant éventuellement un ou plusieurs substituants sélectionnés parmi les groupes nitro, amino, hydroxyle, sulfonyle, halogène, phényle, alkyle, haloalkyle, hydroxyalkyle, aminoalkyle, aryle, alcényle et alcynyle, avec un catalyseur de Friedel-Crafts dans un solvant organique aprotique et avec du formaldéhyde diméthylacétal (FDA) en tant qu'agent de réticulation.

9. Procédé selon la revendication 8, dans lequel la concentration du monomère de formule (I) dans le solvant organique aprotique se situe dans la plage allant de 0,001 à 0,6 M.

10. Procédé selon la revendication 8 ou 9, dans lequel le solvant organique aprotique est sélectionné dans le groupe consistant en le dichloroéthane (DCE), le toluène, le benzène, le nitrométhane (CH₃NO₂), le disulfure de carbone et le chlorobenzène.

11. Procédé selon l'une quelconque des revendications 8 à 10, dans lequel le catalyseur de Friedel-Crafts est sélectionné dans le groupe consistant en BF₃, BeCl₂, TiCl₄, SbCl₅, SnCl₄, FeCl₃, AlCl₃, Sc(OTf)₃, Mo(CO)₆, SeCl₄, TeCl₄, l'acide sulfurique, l'acide fluorhydrique et des super acides.

12. Procédé selon l'une quelconque des revendications 8 à 11, dans lequel le rapport molaire du monomère de formule (I) au FDA se situe dans la plage allant de 1:3 à 1:40.

13. Carbone microporeux pouvant être obtenu par carbonisation d'un polymère hyper-réticulé de Formule (II) : 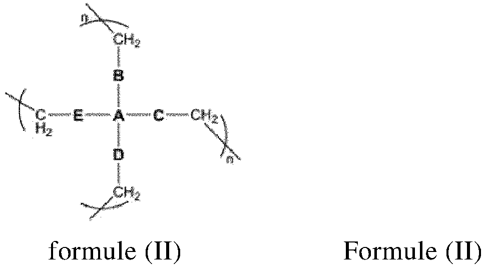
dans lequel A est sélectionné parmi un atome C, un atome Si, un atome Ge, un atome Sn, un groupe adamantane, un groupe éthane et un groupe éthène, et dans laquelle chacun de B, C, D et E est une structure cyclique sélectionnée parmi les radicaux des composés benzène, naphtalène, anthracène, phénanthrène, pyrène, présentant éventuellement un ou plusieurs substituants sélectionnés parmi les groupes nitro, amino, hydroxyle, sulfonyle, halogène, phényle, alkyle, haloalkyle, hydroxyalkyle, aminoalkyle, aryle, alcényle et alcynyle, et dans laquelle n est un entier compris entre 200 et 6 000,
dans lequel la carbonisation est mise en oeuvre selon le procédé de l'une quelconque des revendications 1 à 12,
le carbone microporeux étant **caractérisé par** une surface BET accrue et une quantité accrue de micropores présentant une taille de pores au-dessous de 7 Å par comparaison au polymère hyper-réticulé de Formule (II) avant carbonisation, dans lequel la surface BET et la quantité de micropores présentant une taille de pores au-dessous de 7 Å sont mesurées tel que divulgué dans la description.

14. Utilisation du carbone microporeux selon la revendication 13, pour stocker de l'hydrogène, du méthane ou du dioxyde de carbone.
